Europäisches Patentamt

European Patent Office

Office européen des brevets

(11) Veröffentlichungsnummer: **0 154 941 B1**

(12) **EUROPÄISCHE PATENTSCHRIFT**

(45) Veröffentlichungstag der Patentschrift: 16.10.91      (51) Int. Cl.⁵: **G01K 5/02**

(21) Anmeldenummer: 85102593.2

(22) Anmeldetag: 07.03.85

(54) **Thermometer sowie Verfahren zum Herstellen eines Thermometers.**

(30) Priorität: 10.03.84 DE 3408799
                23.05.84 DE 3419155

(43) Veröffentlichungstag der Anmeldung:
     18.09.85 Patentblatt 85/38

(45) Bekanntmachung des Hinweises auf die
     Patenterteilung:
     16.10.91 Patentblatt 91/42

(84) Benannte Vertragsstaaten:
     **BE DE FR GB NL**

(56) Entgegenhaltungen:
     **DE-C- 938 757**
     **DE-C- 959 139**
     **US-A- 2 853 881**
     **US-A- 4 170 138**
     **US-E- 29 750**

(73) Patentinhaber: **Alber, Bernd**
     **Ritter Strasse 19**
     **W-7500 Karlsruhe 1(DE)**

(72) Erfinder: **Alber, Bernd**
     **Ritter Strasse 19**
     **W-7500 Karlsruhe 1(DE)**

(74) Vertreter: **Dr.-Ing. Hans Lichti Dipl.-Ing. Heiner**
     **Lichti Dipl.-Phys. Dr. Jost Lempert**
     **Postfach 41 07 60 Durlacher Strasse 31**
     **W-7500 Karlsruhe 41(DE)**

Rank Xerox (UK) Business Services

## Beschreibung

Die Erfindung betrifft ein Verfahren zum Herstellen eines Thermometers, insbesondere auch als Thermoaräometer, wobei an einer Thermometerkapillare ein Fühlergefäß und am unteren Ende eines Umhüllungsrohrs für die Thermometerkapillare ein Aufnahmeteil für das Fühlergefäß ausgebildet wird, und anschließend die Thermometerkapillare in das Umhüllungsrohr eingebracht wird, sowie eine Vorrichtung zur Durchführung des Verfahrens, zwecks Herstellung von Thermometern, insbesondere Thermoaräometern, wobei die Vorrichtung lokal hitzeerzeugende Bearbeitungsstationen aufweist.

Die DE-C-959 139 zeigt Thermometer mit einem mit einer Kapillare umgebenen Glasschutzrohr, die vereinfacht und verbilligt hergestellt werden sollen und bei denen eine Justierung bzw. Eichung ermöglicht sein soll, bevor das Kapillarrohr in das Glasschutzrohr eingesetzt wird. Das Kapillarrohr wird am Ende zu einem Flüssigkeitsbehälter aufgeblasen und das Umhüllungsrohr zu einer verjüngten Spitze ausgezogen und dann zugeschmolzen. Nach Versehen der Kapillare mit einer Skala und Fertigeichung wird diese in das Glasschutzrohr eingeschoben. Nachteilig ist, daß zwischen Umhüllungsrohr und Kapillargefäß den Wärmeübergang und damit die Ansprechgeschwindigkeit des Thermometers verzögernde Luftpolster vorhanden sein können.

Die US-A-2 853 881 zeigt ein Thermoaräometer an sich, bei dem zwischen dem Kapillargefäß und dem umgebenden Hohlrohr Teilchen relativ guter Leitfähigkeit angeordnet sind, die durch aufgegossenes Plastikmaterial an ihrem Ort gehalten werden. Hierdurch werden zwar größere Luftpolster vermieden und ein Wärmeleichtblick geschaffen, aufgrund des Abstandes zwischen Umhüllung und Kapillare ist der Wärmeübergang aber ebenfalls nicht optimal.

Die DE-C-938 757 zeigt ein Verfahren und eine Vorrichtung zur Herstellung von Thermometern für klinische oder tierärztliche Zwecke. Als Nachteil führt sie die Zerbrechlichkeit bekannter Thermometer auf und strebt an, ein Quecksilberthermometer zu schaffen, bei dem kein Glasteil der Berührung von außen zugänglich ist. Hierzu wird die Thermometerkapillare mit einer Thermometerkugel durch eine rohrförmige Hülle aus durchsichtigem Kunststoff umgeben, die anschließend im Bereich der Thermometerkugel erhitzt und im weichen Zustand gegen dieselbe gedrückt wird, wozu mit einem elektrischen Heizwiderstand versehene teilschalenartige Formen vorgesehen sind. Das Verfahren beruht darauf, daß der Kunststoff bei einer Temperatur geformt werden kann, bei der die Glaskapillare noch formstabil ist, also die Kapillare eine höhere Schmelztemperatur aufweist als der Kunststoff, so daß dieser gegen die noch stabile Kapillare gedrückt werden kann.

Der Erfindung liegt die Aufgabe zugrunde, ein Verfahren und eine Vorrichtung zur Herstellung eines präzise und insbesondere schnell ansprechenden Thermometers, insbesondere auch als Thermoaräometer zu schaffen, wobei das Verfahren durch die Vorrichtung zumindestens weitgehend automatisiert durchführbar sein soll.

Erfindungsgemäß wird die genannte Aufgabe beim Verfahren der eingangs genannten Art dadurch gelöst, daß die Thermometerkapillare mit einem Ende in eine Form, wie eine Graphitform, eingesteckt und das Fühlergefäß durch Blasen mit in die Form eingestecktem Ende des Gefäßes exakt bestimmbar ausgebildet wird, daß das Aufnahmeteil des Thermometers derart ausgeformt wird, daß das Umhüllungsrohr an seinem unteren Ende zunächst geschlossen und anschließend ein an seinem unteren Ende dem ausgeformten Fühlergefäß entsprechender Dorn unter Erhitzen in das geschlossene Ende des Umhüllungsrohrs eingeführt wird und derart eine exakt bestimmbare Ausstülpung gebildet wird, die eine der Außenkontur des Fühlergefäßes paßgenau entsprechende Innenkontur aufweist, so daß beim Einbringen der Thermometerkapillare in das Umhüllungsrohr das Fühlergefäß in den Unterteil des Aufnahmeteils an dessen Wandung dicht anliegend eingepaßt wird. Die Vorrichtung zur Durchführung des Verfahrens ist dadurch gekennzeichnet, daß bei einer der Bearbeitungsstationen ein Dorn vorgesehen ist, der in einen an einem Ende geschlossenen Glasrohrabschnitt unter Erhitzung des Endes zur Bildung eines Aufnahmeteils für das Fühlergefäß einführbar ist und dessen geschlossenes Ende formgenau ausstülpen kann und daß der Dorn so ausgestaltet ist, daß das Fühlergefäß paßgenau in das Aufnahmeteil eingebracht werden kann.

Durch die Erfindung wird erreicht, daß die Außenkontur des Gefäßes der Thermometerkapillare in einem Anlagebereich exakt der Innenkontur des Aufnahmeteils des Umhüllungsrohrs entspricht, so daß das Gefäß des Thermometers in diesem Bereich praktisch ohne Lufteinschluß dicht im Aufnahmeteil des Aräometers einsitzt, so daß isolierende Luftzwischenräume vermieden sind. Hierdurch wird erreicht, daß die Thermometerflüssigkeit genauso schnell und exakt anspricht, wie bei Thermometern, bei denen in mühsamer Handarbeit das untere Ende der Kapillare mit dem unteren Ende des Umhüllungsrohrs verschmolzen wurde, damit also praktisch keine doppelten Wände von der Außenwand bis zum Inneren des Gefäßes des Thermometers gegeben sind. Im Gegensatz zur Herstellung von Thermometern und Thermoaräometern nach dem Stand der Technik, die, wie dargelegt, in mühsamer Handarbeit erfolgen muß, kann das erfindungsgemäße Verfahren zu einem Prinzip auch in Handarbeit oder in teilmechanisierter Weise durchgeführt werden, doch bietet es aufgrund der erfindungsgemäß vorgesehenen Verfahrensschritte und der Vermeidung der Notwendigkeit eines Zusammenschmelzens von Thermometerkapillare mit Umhüllungsrohr die Möglichkeit einer weitgehend automatischen Herstellung, die mit der erfindungsgemäßen Vorrichtung erfolgt. Durch das erfindungsgemäße Verfahren können durchaus bis zu mehrere hundert Thermometer bzw. Thermoaräometer pro Stunde mit geringem Personalaufwand fertiggestellt werden, wobei die Genauigkeit der herzustellenden Thermometerteile im interessierendem Bereich bis zu 1/100 mm reicht. Die Wandstärke kann grundsätzlich im Bereich unter 1 mm liegen. Vorteilhafterweise ist vorgesehen, daß zunächst das Thermometer justiert und mit einer Skala versehen wird, bevor es in das Umhüllungsrohr eingesetzt wird, wobei insbesondere eine Wandstärke bis unter 0,3 mm geschaffen werden kann. Insbesondere kann die Glasstärke des unteren Endes des Aufnahmeteils durch die Tiefe des Einstecken des Dorns exakt bestimmt werden. Dadurch, daß der an sich schlechte Wärmeleiter Glas möglichst dünn gemacht wird, wird ebenfalls das Ziel eines schnellen Wärmeübergangs zur thermometrischen Flüssigkeit hin unterstützt. Durch das erfindungsgemäße Verfahren, bei dem das Fühlergefäß dicht in das angepaßte Aufnahmeteil der Umhüllung eingesetzt wird, führt die geringe Stärke des Gefäßes einerseits und des Umhüllungsrohres andererseits nicht zu einer Schwächung, vielmehr wird durch die dort gegebene enger liegende Doppellage eine gute Stabilität erreicht. Ein wesentlicher Vorteil des erfindungsgemäßen Verfahrens besteht darin, daß der Schritt einer zusätzlichen, gemeinsamen Erhitzung und Verschmelzung von Thermometerkapillar und Umhüllungsrohr, der grundsätzlich von Hand durchgeführt werden muß, völlig vermieden werden kann.

Zweckmäßigerweise oberhalb (und/oder aber auch unterhalb) und/oder teilweise noch um das Gefäß kann sich bei der erfindungsgemäßen Ausführung eine dünne Schicht aus Kupfer (z.B. fein verteilter Kupferschrot) oder aus einem ähnlich gut wärmeleitenden Material, z.B. Silber, befinden. Das - aus Kostengründen vorzuziehende - Kupfer ist an seiner Oberfläche mittels Siegellack, Silikonkautschuk, hochtemperaturresistenten Keramikmassen, Kunststoffen und dergleichen eingedichtet, so daß es bei Umdrehen oder Schräghalten des Thermometers nicht verrutschen kann. Oberhalb des Siegellacks und dergleichen ragt die Kapillare zentrisch oder axial in die dem Gefäß entgegengesetzte Seite des Umhüllungsrohrs. Die Kupferumgebung des Gefäßes erhöht die Ansprechzeit der erfindungsgemäßen Thermometer beträchtlich.

Die einfache Einpassungsmöglichkeit der geraden Kapillaren genau im axialen Zentrum des Aräometers und die Befestigung des Skalenträgers an die gerade Kapillare hat zur Folge, daß ein solches Aräometer im Gegensatz zu solchen nach dem Stande der Technik in der Prüfflüssigkeit völlig senkrecht schwimmt und keinerlei Ungleichgewicht entsteht. Die erfindungsgemäß hergestellten Thermoaräometer verbessern deshalb auch die Anzeigegenauigkeit.

Eine weitere bevorzugte Ausgestaltung der Erfindung sieht vor, daß aufgrund der einfachen Einpassungsmöglichkeit des Gefäßes in das Aufnahmeteil des Umhüllungsrohrs eine Befestigung des thermometrischen Skalenträgers einschließlich Skale an der Kapillare außerhalb des engen Umhüllungsrohrs erfolgt, z.B. ist mittels eines schnell abbindenden hochtemperaturresistenten Klebstoffs eine sehr schnelle und ästhetische schöne Verbindung des Skalenträgers mit der Kapillare möglich, denn der Klebstoff kann präzise und fein dosiert auf die später nicht sichtbare Rückseite der Kapillare aufgetragen werden. Die Verklebung erfolgt durch einfaches Zusammenfügen von Skalenträger und Kapillare. In dem engen Umhüllungsrohr ist ein solches Vorgehen nicht möglich. Durch den gewonnenen Bewegungsspielraum können im übrigen die Skalenträger jetzt auch auf viele andere Weisen an den Kapillaren befestigt werden.

Während bei Laborthermometern, wenn sie insbesondere für höhere Temperaturen vorgesehen sind, die Skalen in aufwendig geätztem Milchglas ausgebildet sind, ist in äußerst bevorzugter Ausgestaltung vorgesehen, daß der Skalenträger aus hochtemperaturfestem Material, wie insbesondere hochtemperaturfestem Papier oder glasfaserummanteltem Kunststoff besteht, die Temperaturen von bis zu 600°C oder mehr aushalten können. Diese Materialien lassen sich einfach bedrucken; weiterhin können sie eingeklebt werden, während die Milchglasträger bisher mit Draht im Umhüllungsrohr befestigt waren, wobei die Drahtbefestigungsstellen die bruchempfindlichsten waren, die nun bei der erfindungsgemäßen Weiterentwicklung in vorteilhafter Weise wegfallen.

Die Anbringungsmöglichkeit des thermometrischen Skalenträgers an die Kapillare außerhalb des Umhüllungsteils bewirkt als weiterer Vorteil, daß keine Kapillaren mit S-förmigem Knick verwendet zu werden brauchen, sondern es können völlig gerade automatische hergestellte Kapillaren samt Gefäßen eingefügt werden.

Ein zusätzlicher Vorteil der Erfindung ist die wesentlich bequemere und schnellere Vorjustierung des Thermometers, die zudem keine giftigen Dämpfe entstehen läßt. Die mit thermometrischer Flüssigkeit voll gefüllten, geraden, der Länge, der Steighöhe bzw. Teilung und dem Volumen des Ausdehnungsgefäßes nach praktisch völlig gleichen oben offenen Kapillaren brauchen nur in (etwa) senkrechter Lage in einen Thermostat, wie Trockenofen oder Flüssigkeitsbad, gestellt und auf eine bestimmte, wesentliche niedrigere als bisher zum Ausbrennen verwendeten Temperatur gebracht zu werden, dann fließt infolge Ausdehnung aus den Öffnungen aller betreffenden Kapillaren überschüssige thermometrische Flüssigkeit aus, so daß in allen Kapillaren danach praktisch die gleiche Menge verbleibt. Die ausfließende Flüssigkeit kann leicht z.B. per Abtupfen beseitigt werden. Anschließend wird der Justierfüllstand markiert. Schließlich erfolgt das Verschließen der Kapillaren und das Ausbilden der Expansionserweiterung praktisch in einem Arbeitsgang - alles bequem außerhalb des engen Umhüllungsrohrs. Auf die erwähnte Weise können gleichzeitig eine große Anzahl Kapillaren sehr schnell, bequem genau vorjustiert werden, und zwar prinzipiell ohne Gefährdung der Mitarbeiter. Das bislang durchgeführte zeitlich aufwendige Ausbrennen erübrigt sich.

Ein weiterer Vorteil der Erfindung ist, daß auch die Stengelkuppen der Aräometer automatisch gebildet werden können und zwar Kuppen von Aräometerstengeln aller Längen und Durchmesser.

Weitere Vorteile und vorzugsweise Merkmale der Erfindung ergeben sich aus den Ansprüchen und aus der nachfolgenden Beschreibung, in der ein Ausführungsbeispiel eines erfindungsgemäß hergestellten Thermometers sowie die wesentlichen Schritte des erfindungsgemäßen Verfahrens zur Herstellung eines solchen Thermometers im einzelnen erläutert sind. Dabei zeigt:

Figur 1     ein fertiges erfindungsgemäß hergestelltes Thermometer als Thermoaräometer;

Figur 2     den Schritt der Herstellung des Kapillarteils des Thermometers;

Figur 3     den Beginn der Herstellung des Aufnahmeteils für das Fühlergefäß des Thermometers;

Figur 4     eine Bearbeitungsstation einer Vorrichtung zum Herstellen von Thermo(aräo)metern in schematischer Seitenansicht; und

Figur 5     einen Schnitt entlang V-V der Figur 4.

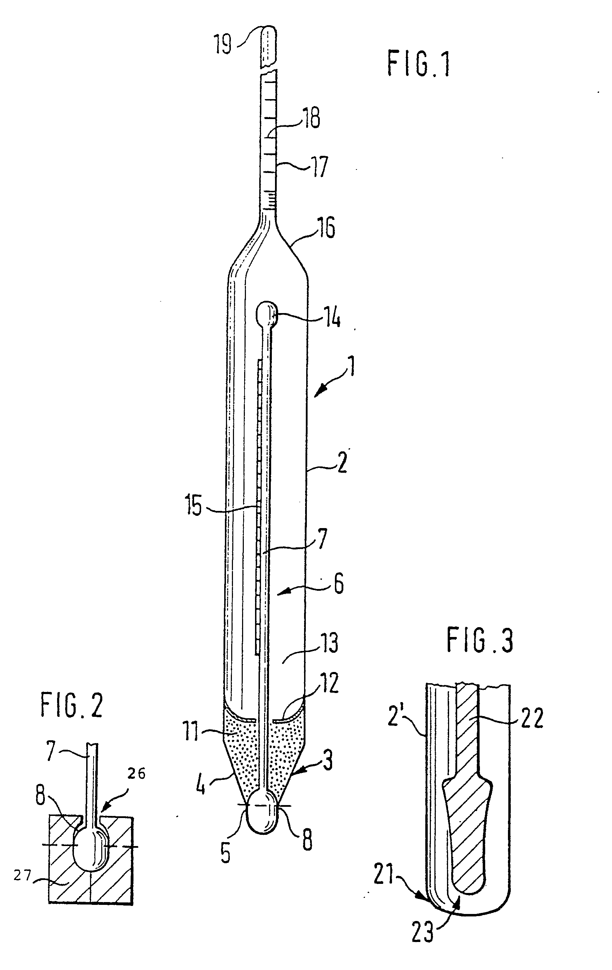

Das erfindungsgemäß hergestellte Thermoaräometer 1 ist in der Figur 1 dargestellt. Das Thermoaräometer 1 ist im oberen Bereich abgeschnitten. Das Thermoaräometer 1 weist einen Körper oder ein Umhüllungsrohr 2 mit einem in der Regel verjüngten Ende 3 auf, das als Aufnahmeteil 4 für ein Fühlergefäß 8 ausgebildet ist. Das untere Ende des Aufnahmeteils 4 ist zylinderförmig mit einer exakt vorgegebenen Innenkontur ausgeformt. Weiterhin weist das Thermoaräometer ein eigentliches Thermometer 6 mit einer Thermometerkapillare 7 mit einem an deren unteren Ende ausgebildeten zylinderförmigen Fühlergefäß 8 für die thermometrische Flüssigkeit auf. Der Außendurchmesser des Gefäßes 8 entspricht exakt dem Innendurchmesser des Aufnahmeteils 4 bis zum untersten abgerundeten Teil 5. Das eigentliche Thermometer 6 ist mit seinem Fühlergefäß 8 in das Aufnahmeteil 4 eingepaßt. Oberhalb des Fühlergehäuses 8 ist das Umhüllungsrohr 2 mit gut wärmeleitenden Material 11 in Form von fein verteiltem Kupfer oder ähnlichem ausgefüllt. Das Kupfer 11 ist auf seiner Oberseite mittels Siegellack 12 oder ähnlichen Materialien (eventuell hochtemperaturresistenten Keramikmassen) fixiert oder fest eingedichtet, so daß es bei Umdrehen oder Schräghalten des Thermometers 1 nicht verrutschen kann. Oberhalb des Siegellacks ragt die Kapillare 7 zentrisch oder axial nach oben.

Die Thermometerkapillare 7 ist an ihrem oberen Ende mit einem Ausdehnungsgefäß 14 versehen. An der Kapillare 7 ist ein flacher, ebener Skalenträger 15 befestigt, beispielsweise angeklebt, dessen Ebene sich entlang der Kapillare 7 und senkrecht zur Blattebene erstreckt.

Am oberen dem Aufnahmeteil 4 abgewandten Ende 16 ist das Umhüllungsrohr 2 bei einem Thermoaräometer 1 verjüngt (bei einem Thermometer kann es einfach verschlossen sein). Auf dem verjüngten Ende 16 ist der Aräometerstengel 17 zentrisch befestigt, in dem eine Aräometerskala 18 angeordnet ist. Am oberen Ende ist der Stengel 17 mit einer Kuppe 19 verschlossen.

Das Thermometer 1 entsprechend der Figur 1 wird in der folgenden Weise hergestellt:
Zunächst wird an einem Ende 26 der Thermometerkapillare 7 das Gefäß 8 mit exakter bestimmter Außenkontur ausgebildet. Dies erfolgt dadurch, daß die Kapillare 7 in eine (im dargestellten Ausführungsbeispiel zweiteilige) Form 27 eingesteckt wird, die beispielsweise aus Kohle, Messing, Kupfer oder dergleichen besteht. Die Form weist einen exakt vorgegebenen, vorzugsweise zylinderförmigen Hohlraum auf. Das vorher zugeschmolzene Ende der Kapillare 7 wird erhitzt und in die Kapillare von deren am Ende 16 entgegengesetzten Ende Gas eingeblasen. Hierdurch weitet sich das in die Form 27 eingesteckte Ende auf und legt sich an den Innenwänden der Form an, so daß das sich derart bildende Gefäß mit seiner Außenkontur exakt die Kontur des Hohlraums der Form 27 annimmt. Zur Produktion besonders großer Gefäße kann zusätzlich gezielt flüssiges Glas zugegeben werden. Nach Abkühlung wird die Form geöffnet und die hierdurch mit dem Gefäß 8 versehene Thermometerkapillare 7 entnommen. Dieser Vorgang kann voll automatisch mittels einer automatischen Glasblasmaschine ausgeführt werden. Es wird ein äußerst exaktes Ausdehnungsgefäß geschaffen, dessen Form eine Genauigkeit bis zu einem 1/100 mm im Bereich des Gefäßes erreicht.

Nach Versehen der Thermometerkapillare 7 mit dem unteren Gefäß 8 wird die Kapillare 7 mit Ausdehnungsflüssigkeit gefüllt und nach Füllen, zusammen mit einer Mehrzahl identisch ausgebildeter Kapillaren in einen Thermostat, beispielsweise ein Flüssigkeitsbad eingebracht. Es erfolgt eine Erhitzung auf eine Temperatur, die wesentlich unterhalb der Verdampfungstemperatur der Ausdehnungsflüssigkeit liegt. Hierdurch wird die Ausdehnungsflüssigkeit im flüssigen Zustand so weit ausgetrieben, daß in allen Thermometerkapillaren die gleiche Flüssigkeitsmenge verbleibt. Die ausgelaufene Flüssigkeit kann dann abgespült oder abgewischt werden. Anschließend erfolgt die Hauptjustierung durch Markierung beispielsweise zweier Thermometerflüssigkeitsstände bei zwei verschiedenen Temperaturen, wobei einer in der Regel der Eispunkt ist. Nach Justierung wird das Ausdehnungsgefäß 14 des Thermometers unter gleichzeitiger Ausbildung der Expansionserweiterung verschlossen und schon der die Thermometerskala tragende Skalenträger 15 an der Kapillare 7 befestigt, beispielsweise festgeklebt.

Weiterhin wird ein Glasrohrabschnitt 2' zur Herstellung des Umhüllungsrohrs 2 an seinem unteren Ende 21 in an sich bekannter Weise geschlossen. Im dargestellten Ausführungsbeispiel der Figur 3 wird das Ende einfach zusammengeschweißt. Stattdessen könnte auch schon eine Vorformung erfolgen, indem das Ende des Rohrstücks 2' unter Erwärmung ebenfalls in eine geeignete Form entsprechend der Form 27 eingedrückt wird. Nach Schließen des Endes 21 des Rohrstücks 2' wird unter Wärmezufuhr zum unteren Endbereich 21 das Rohrstück 2' in das Rohrstück - vorzugsweise automatisch - ein Dorn 22 eingeführt, der insbesondere in seinem unteren Bereich eine ebenfalls exakte vorgegebene Form oder Kontur aufweist, die insbesondere am unteren Ende 23 dem Gefäß 8 der Thermometerkapillare 7 entspricht.

Vorzugsweise ist das unterste Ende 23 des Dorns 22 abgerundet ausgebildet, wenn das Ausdehnungsgefäß der Thermometerkapillare als Zylinder ausgebildet ist. Durch das Einführen des Dorns bei erhitztem Ende 21 wird dann das Ende 21 in die aus der Figfur 1 ersichtliche Form gedrückt und der Aufnahmeteil 4 gebildet, wobei die Innenkontur durch die Außenkontur des Dorns exakt ausgebildet wird.

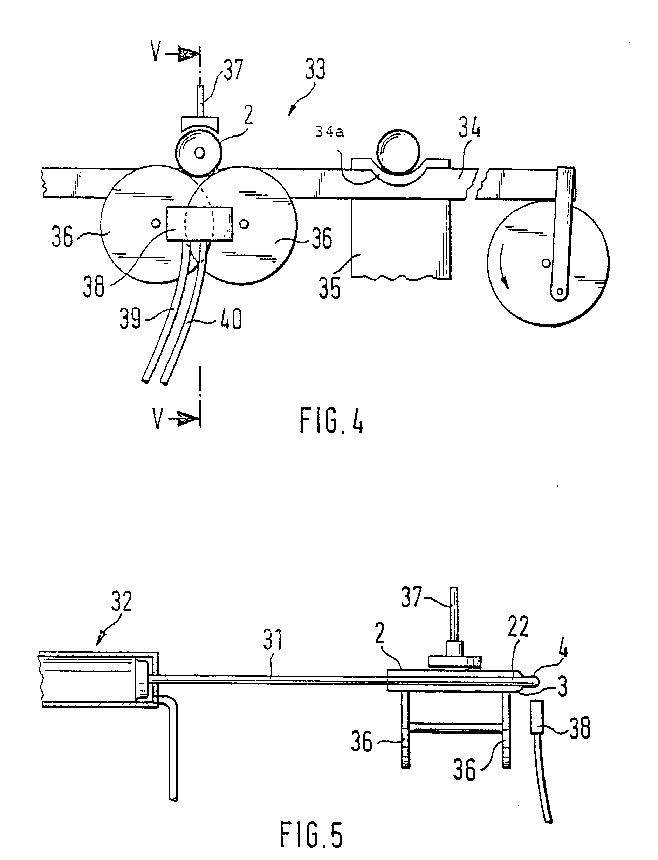

Der Dorn 22 ist am vorderen Ende eines Stößels 31 einer Kolben-Zylindereinheit 32 ausgebildet, die wiederum Teil einer Vorrichtung zum Herstellen von Thermometern und Thermoaräometern 1 ist, deren für die Ausbildung des untersten abgerundeten Teils 5 des Aufnahmeteils 4 des Umhüllungsrohrs 2 wesentliche Arbeitsstation 33 in den Figuren 4 und 5 schematisch dargestellt ist.

An einem Ende schon geschlossene Rohrstücke 2 werden über einem pleuelstangenartig bewegten Greifer 34 der Arbeitsstation 33 diskontinuierlich zugefördert, wobei sie zwischen dem Fördervorgang jeweils in stützenartigen Brücken 35 abgelegt und nach dem Ablegen im nächsten Förderzyklus wieder von einer Ausnehmung 34a des Greifers 34 aufgenommen werden, um weitertransportiert zu werden. Im Bereich der Arbeitsstation 33 werden die Rohrstücke 2' auf Scheiben 36 abgelegt, die sich gegebenenfalls drehen können und das Rohrstück 2' mitdrehen, damit dieses beim Verformen axialsymmetrisch ausgebildet wird. In der Arbeitsstation 33 wird das Rohrstück 2' durch ein Andrückelement 37 festgehalten, so daß es sich nicht axial verschieben kann. Das das Aufnahmeteil 4 bildende Ende 3 des Rohrstücks 2' wird durch einen Brenner 38 erhitzt, dem über eine Leitung 39 Gas und über eine andere 40 Sauerstoff zugeführt wird. Das Glasstück 32 wird festgehalten und der Dorn 22 am Stößel 31 in das Rohr 2' eingedrückt. Er stülpt den erwärmten Boden des einseitig geschlossenen Rohrteils 2' im Bereich 3 zum Aufnahmeteil 4 für das Thermometer-Fühlergefäß aus, so daß das Umhüllungsrohr 2 erstellt ist. Anschließend wird der Stößel 31 wieder zurückgezogen, das Umhüllungsrohr 2 weitergefördert und das nächste zugeförderte Glasrohr 2' in entsprechender Weise ausgeformt.

Nach Fertigstellung wird der Dorn herausgezogen und anschließend kann in das so geschaffene Umhüllungsrohr 2 die Thermometerkapillare 7 eingepaßt werden, wobei das Gefäß 8 in das Aufnahmeteil 4 eingesetzt wird und mit seiner Außenwand dicht an der Innenwand des Teils 4 unter Vermeidung von Lufteinschlüssen anliegt.

Da die Thermometerkapillare 7 schon vollständig hergestellt und mit Skalenträger versehen wurde, bevor sie in das Umhüllungsrohr 2 eingesetzt wurde, entfällt der bei dem Herstellungsverfahren nach dem Stand der Technik erfolgende umständlichere Schritt des nachträglichen Versehens mit einem Skalenträger.

Nach Einsetzen der Thermometerkapillare 7 in das Umhüllungsteil 2 wird in dieses bis in den Bereich unmittelbar über dem Fühlergefäß 8 wärmeleitendes Material 11, wie eben Kupferteilchen eingebracht. Weiterhin wird das wärmeleitende Material 11 dort mit einer Fixierung 12 versehen, beispielsweise mit Siegellack oder auch temperaturresistenten keramischen Massen eingedichtet.

Bei einem Thermoaräometer wird am oberen Ende des den Aräometerkörper bildenden Umhüllungsrohres 2 eine Verengung angebracht, auf die der Aräometerstengel aufgesetzt wird. Weiterhin erfolgt in an sich bekannter Weise die Justierung des Aräometers, einschließlich des Eindichtens des Ballastes durch Siegellack oder dergleichen sowie das Einstecken des mit der Aräometerskala versehenen Skalenträgers in den Aräometerstengel und schließlich das Schließen desselben durch die Stengelkuppe. Insoweit wird auf die eingangs genannte Literaturstelle Domke-Reimerdes, Handbuch der Aräometrie, Berlin 1912 verwiesen.

**Patentansprüche**

1. Verfahren zum Herstellen eines Thermometers, insbesondere auch als Thermoaräometer, wobei an einer Thermometerkapillare ein Fühlergefäß und am unteren Ende eines Umhüllungsrohrs für die Thermometerkapillare ein Aufnahmeteil für das Fühlergefäß ausgebildet wird, und anschließend die Thermometerkapillare in das Umhüllungsrohr eingebracht wird, dadurch gekennzeichnet, daß die Thermometerkapillare mit einem Ende in eine Form, wie eine Graphitform, eingesteckt und das Fühlergefäß durch Blasen mit in die Form eingestecktem Ende des Gefäßes exakt bestimmbar ausgebildet wird, daß das Aufnahmeteil des Thermometers derart ausgeformt wird, daß das Umhüllungsrohr an seinem unteren Ende zunächst geschlossen und anschließend ein an seinem unteren Ende dem ausgeformten Fühlergefäß entsprechender Dorn unter Erhitzen in das geschlossene Ende des Umhüllungsrohrs eingeführt wird und derart eine exakt bestimmbare Ausstülpung gebildet wird, die eine der Außenkontur des Fühlergefäßes paßgenau entsprechende Innenkontur aufweist, so daß beim Einbringen der Thermometerkapillare in das Umhüllungsrohr das Fühlergefäß in den Unterteil des Aufnahmeteils an dessen Wandung dicht anliegend eingepaßt wird.

2. Verfahren nach Anspruch 1, dadurch gekennzeichnet, daß die Glasstärke des Aufnahmeteils des Thermometers durch die Tiefe des Einführens des Dorns bestimmt wird.

3. Verfahren nach Anspruch 1 oder 2, dadurch gekennzeichnet, daß das untere Ende des Umhüllungsrohrs zur Ausbildung der dem Fühlergefäß angepaßten Ausstülpung lediglich so weit erwärmt wird, daß der eingeführte Dorn die Ausstülpung herausdrücken kann.

4. Verfahren nach Anspruch 1 oder 2, dadurch gekennzeichnet, das bei dem Einführen des Dorns die Ausstülpung so weit erhitzt und verflüssigt wird, daß die Glasschmelze noch nicht frei heruntertropft.

5. Verfahren nach einem der Ansprüche 1 bis 4, dadurch gekennzeichnet, daß zunächst das Thermometer justiert und mit einer Skala versehen wird, bevor es in das Umhüllungsrohr eingesetzt wird.

6. Verfahren nach einem der Ansprüche 1 bis 5, dadurch gekennzeichnet, daß vor dem Justieren die mit dem Fühlergefäß versehene Thermometerkapillare in einen Thermostat eingebracht wird, um überschüssige thermometrische Flüssigkeit zum Auslaufen zu bringen.

7. Verfahren nach einem der Ansprüche 1 bis 6, dadurch gekennzeichnet, daß der Raum im Umhüllungsrohr unmittelbar im Bereich des Fühlergefäßes mit gut wärmeleitendem Material wie Kupfer- oder Silberteilchen gefüllt wird und das Material dann fixiert wird.

8. Verfahren nach einem der Ansprüche 1 bis 7, dadurch gekennzeichnet, daß das Fühlergefäß und das Aufnahmeteil mit einer Wandstärke von weniger als 0,5 mm ausgebildet werden.

9. Verfahren nach einem der Ansprüche 1 bis 8, dadurch gekennzeichnet, daß zur Bildung des Fühlergefäßes bei dessen Formung flüssiges Glas zugegeben wird.

10. Verfahren nach einem der Ansprüche 1 bis 9, dadurch gekennzeichnet, daß vor Einbringen der Kapillare in das Umhüllungsrohr eine Vorjustierung durch Erhitzen der mit Thermometerflüssigkeit gefüllten Thermometerkapillare bis zu einer vorgegebenen Temperatur und anschließendem Verschließen der Kapillare erfolgt.

11. Vorrichtung zur Durchführung des Verfahrens nach einem der Ansprüche 1 bis 10, zwecks Herstellung von Thermometern, insbesondere als Thermoaräometer, wobei die Vorrichtung lokal Hitze erzeugende Bearbeitungsstationen aufweist, dadurch gekennzeichnet,
daß bei einer der Bearbeitungsstationen ein Dorn (22) vorgesehen ist, der in einen an einem Ende (21) geschlossenen Glasrohrabschnitt (2') unter Erhitzung des Endes (21) zur Bildung eines Aufnahmeteils (4) für das Fühlergefäß (8) einführbar ist und dessen geschlossenes Ende (21) formgenau ausstülpen kann und daß der Dorn (22) so ausgestaltet ist, daß das Fühlergefäß (8) paßgenau in das Aufnahmeteil (4) eingebracht werden kann.

12. Vorrichtung nach Anspruch 11, dadurch gekennzeichnet, daß der Dorn (22) am vorderen Ende eines Stößels (31) einer Kolbenzylindereinheit (32) der Bearbeitungsstation (33) der Vorrichtung ausgebildet ist.

13. Vorichtung nach Anspruch 11 oder 12, gekennzeichnet, durch einen pleuelstangenartig bewegten Greifer (34) zur diskontinuierlichen Förderung der Glasrohrabschnitte (2') zur Kolben-Zylinder-Einheit (32).

14. Vorrichtung nach Anspruch 13, gekennzeichnet durch nahe dem Greifer (34) angeordnete Brücken (35) zur Ablage der Glasrohrabschnitte (2') zwischen den Förderbewegungen des Greifers (34).

15. Vorrichtung nach einem der Ansprüche 11 bis 14, gekennzeichnet durch drehbare Scheiben (36) in der Bearbeitungssstation (33) zum Drehen der Glasrohrabschnitte (2') bei Verformen ihrer Enden (21).

16. Vorrichtung nach einem der Ansprüche 11 bis 15, gekennzeichnet durch ein Andrückteil (37) zur axialen Festlegung der Glasrohrabschnitte (2') in der Bearbeitungsstation (33).

17. Vorrichtung nach einem der Ansprüche 11 bis 16, gekennzeichnet, durch einen Brenner (38) zum Erhitzen der Enden (21) der Glasrohrabschnitte (2') in der Bearbeitungsstation (33).

**Claims**

1. Method for the manufacture of a thermometer, particularly a thermoaerometer, a sensing bulb being constructed on a thermometer stem end at the lower end of an enveloping tube for the thermometer stem is constructed a reception part for the bulb, the thermometer stem is then introduced into the enveloping tube, characterized in that the thermometer stem is inserted with one end in a mould, such as a graphite mould end the sensing bulb is constructed in accurately determinable manner by blowing with the bulb end inserted in the mould, that the reception part of the thermometer is shaped in such a way that the lower end of the enveloping tube is initially closed and subsequently a mandrel corresponding to the shaped sensing bulb at its lower end is inserted, accompanied by heating, in the closed end of the enveloping tube and in this way an accurately determinable protuberance is formed, which has an inner contour corresponding in accurately fitting manner to the outer contour of the sensing bulb, so that on introducing the thermometer stem into the enveloping tube the sensing bulb is fitted into the base of the reception part tightly engaging against its wall.

2. Method according to claim 1, characterized in that the glass thickness of the reception part of the thermometer is determined by the depth of mandrel introduction.

3. Method according to claims 1 or 2, characterized in that the lower end of the enveloping tube for forming the protuberance adapted to the sensing bulb is only heated to such an extent that the introduced mandrel can press out the protuberance.

4. Method according to claims 1 or 2, characterized in that on introducing the mandrel the protuberance is heated end liquefied to such an extent that the glass melt still does not freely drip down.

5. Method according to one of the claims 1 to 4, characterized in that initially the thermometer is calibrated end provided with a scale before being inserted in the enveloping tube.

6. Method according to one of the claims 1 to 5, characterized in that prior to the calibration, the thermometer stem provided with the sensing bulb is placed in a thermostat, so as to make excess thermometric liquid run out.

7. Method according to one of the claims 1 to 6, characterized in that the space in the enveloping tube in the immediate vicinity of the sensing bulb is filled with good heat conducting material such as copper or silver particles end the material is then fixed.

8. Method according to one of the claims 1 to 7, characterized in that the sensing bulb end the reception part are constructed with a wall thickness of less than 0.5 mm.

9. Method according to one of the claims 1 to 8, characterized in that liquid glass is added during the moulding of the sensing bulb for the formation thereof.

10. Method according to one of the claims 1 to 9, characterized in that prior to introducing the stem in the enveloping tube, there is a precalibration by heating the thermometric liquid-filled thermometer stem up to a predetermined temperature end subsequently sealing the stem.

11. Apparatus for performing the method according to one of the claims 1 to 10 for the manufacture of thermometers, particularly as theromoaerometers, in which the apparatus has local heat-producing manufacturing stations, characterized in that in one of the manufacturing stations a mandrel (22) is provided, which can be introduced into a glass tube portion (2'), which is closed at one end (21), accompanied by the heating of said end (21) for the formation of a reception part (4) for the sensing bulb (8) and whose closed end (21) can protrude in geometrically accurate manner and in that the mandrel (22) is so constructed that the sensing bulb (8) can be introduced into the reception part (4) in accurately fitting manner.

12. Apparatus according to claim 11, characterized in that the mandrel (22) is constructed at the front end of a push rod (31) of a piston-cylinder unit (32) of the apparatus machining station (33).

13. Apparatus according to claims 11 or 12, characterized in that a gripper (34) moved in connecting rod-like manner is provided for the discontinuous conveying of the glass tube portions (2') to the piston-cylinder unit (32).

14. Apparatus according to claim 131 characterized by bridges (35) positioned close to the gripper (34) for the depositing of the glass tube portions (2') between the conveying movements of the gripper (34).

15. Apparatus according to one of the claims 11 to 14, characterized by rotary disks (36) in the machining station (33) for rotating the glass tube portions (2') during the deformation of the ends (21) thereof.

16. Apparatus according to one of the claims 11 to 15, characterized by a pressing part (37) for the axial fixing of the glass tube portions (2') in the machining station (33).

17. Apparatus according to one of the claims 11 to 16, characterized by a burner (38) for heating the ends (21) of the glass tube portions (2') in the machining station (33).

## Revendications

1. Procédé pour la fabrication d'un thermomètre, en particulier aussi sous la forme d'un thermoaréomètre, sur un tube capillaire du thermomètre étant conformé un récipient de détection et l'extrémité inférieure d'une gaine pour le tube capillaire du thermomètre étant munie d'une section de réception pour le récipient de détection, le tube capillaire du thermomètre étant ensuite introduit dans la gaine, **caractérisé en ce** que le tube capillaire du thermomètre est engagé avec l'une de ses extrémités dans un moule, par exemple un moule de graphite et le récipient de détection est conformé de manière définissable avec précision par soufflage, l'extrémité du récipient étant introduite dans le moule; que la section de réception du thermomètre est conformée de telle façon que la gaine est tout d'abord scellée à son extrémité inférieure et qu'ensuite une broche correspondant au récipient de réception fermée à son extrémité inférieure est introduite en l'échauffant dans l'extrémité scellée de la gaine de manière à réaliser une excroissance qui peut être définie avec exactitude et présente un contour intérieur parfaitement ajusté au contour extérieur du récipient de détection , de sorte que lors de l'insertion du tube capillaire du thermomètre dans la gaine, le récipient de détection s'emboîte dans la partie inférieure de la section de réception de manière à coller à la paroi de celle-ci.

2. Procédé selon la revendication 1, caractérisé en ce que l'épaisseur du verre de la section de réception du thermomètre est déterminée par la profondeur d'introduction de la broche.

3. Procédé selon l'une des revendications 1 ou 2, caractérisé en ce que, pour la conformation de l'excroissance adaptée au récipient de détection, l'extrémité inférieure de la gaine est soumise uniquement à un échauffement suffisant pour que la broche introduite puisse repousser l'excroissance.

4. Procédé selon l'une des revendications 1 ou 2, caractérisé en ce que, lors de l'introduction de la broche, l'excroissance est chauffée et liquéfiée de telle façon que le verre fondu ne s'égoutte pas encore librement.

5. Procédé selon l'une des revendications 1 à 4, caractérisé en ce que le thermomètre est tout d'abord ajusté et muni d'une échelle avant d'être inséré dans la gaine.

6. Procédé selon l'une des revendications 1 à 5, caractérisé en ce que le tube capillaire du thermomètre muni du récipient de détection est placé, avant l'ajustage, dans un thermostat pour provoquer l'écoulement du liquide thermométrique excédentaire.

7. Procédé selon l'une des revendications 1 à 6, caractérisé en ce que l'espace dans la gaine est rempli directement dans la région du récipient de détection avec un matériau bon conducteur de chaleur tel que des particules de cuivre ou d'argent et que le matériau est ensuite fixé.

8. Procédé selon l'une des revendications 1 à 7, caractérisé en ce que le récipient de détection et la section de réception sont réalisés avec une épaisseur de paroi inférieure à 0,5 mm.

9. Procédé selon l'une des revendications 1 à 8, caractérisé en ce que, pour la réalisation du récipient de détection, du verre liquide est ajouté lors de la conformation de celui-ci.

10. Procédé selon l'une des revendications 1 à 9, caractérisé en ce que, avant l'introduction du tube capillaire dans la gaine, un ajustage préliminaire est effectué par échauffement du tube capillaire du thermomètre rempli de liguide thermométrique jusqu'à une température prédéterminée, suivi du scellement du tube capillaire.

11. Dispositif pour la mise en oeuvre du procédé selon l'une des revendications 1 à 10 pour la fabrication de thermomètres, en particulier de thermoaréomètres, le dispositif comprenant des stations de traitement développant localement de la chaleur, **caractérisé en ce** que dans l'une des stations de traitement est prévue une broche (22) laquelle peut être introduite dans une section de tube en verre (2') fermée à l'une de ses extrémités (21), avec échauffement de ladite extrémité (21), pour la réalisation d'une section de réception (4) pour le récipient de détection (8) et peut repousser à la forme exacte l'extrémité fermée (21) de celle-ci, et que la broche (22) est conformée de telle façon que le récipient de détection (8) s'emboîte avec précision dans la section de réception (4).

12. Dispositif selon la revendication 11, caractérisé en ce que la broche (22) est conformée à l'extrémité antérieure d'un poussoir (31) d'un système de piston-cylindre (32) de la station de traitement (33) du dispositif.

13. Dispositif selon l'une des revendications 11 ou 12, caractérisé en ce qu'il comprend un preneur (34) actionné à la manière d'une bielle pour le transport discontinu des sections de tube en verre (2') vers le système de piston-cylindre (32).

14. Dispositif selon la revendication 13, caractérisé en ce qu'il comprend à proximité du preneur (34) des ponts (35) pour déposer les sections de tube en verre (2') entre les mouvements de transport du preneur (34).

15. Dispositif selon l'une des revendications 11 à 14, caractérisé en ce qu'il comprend des disques tournants (36) dans la station de traitement (33) pour la mise en rotation des sections de tube en verre (2') lors de la déformation de leurs extrémités (21).

16. Dispositif selon l'une des revendications 11 à 15, caractérisé en ce qu'il comprend un élément presseur (37) pour l'immobilisation axiale des sections de tube en verre (2') dans la station de traitement (33).

17. Dispositif selon l'une des revendications 11 à 16, caractérisé en ce qu'il comprend un brûleur (38) pour chauffer les extrémités (21) des sections de tube en verre (2') dans la station de traitement (33).

EP 0 154 941 B1

FIG.1

FIG.2

FIG.3

FIG. 4

FIG.5